# EUROPÄISCHE PATENTSCHRIFT

(11) **EP 1 095 815 B1**
(45) Veröffentlichungstag und Bekanntmachung des Hinweises auf die Patenterteilung: **24.11.2004**
(21) Anmeldenummer: 00113085.5
(22) Anmeldetag: 17.06.2000
(51) Int. Cl.: B60N 2/427

(54) **Fahrzeugsitz für ein Kraftfahrzeug mit einer Rückenlehne**
Siège avec un dossier pour un véhicule automobile
Seat with backrest for an automotive vehicle

(30) Priorität: 27.10.1999 DE 19951820
(43) Veröffentlichungstag der Anmeldung: 02.05.2001
(73) Patentinhaber: C. Rob. Hammerstein GmbH & Co.KG, 42699 Solingen (DE)
(72) Erfinder: Angerer, Siegfried, 86316 Friedberg (DE); Becker, Burkhard, 42657 Solingen (DE); Frohnhaus, Rainer, 42653 Solingen (DE)
(74) Vertreter: Bauer, Wulf, Dr.

(56) Entgegenhaltungen:
- EP-A- 0 303 795
- EP-A- 0 888 926
- DE-U- 29 603 991
- GB-A- 2 283 163

## Beschreibung

Die Erfindung bezieht sich auf einen Fahrzeugsitz nach dem Oberbegriff des Patentanspruchs 1.

Ein derartiger Fahrzeugsitz ist aus GB 2 283 163 A bekannt. Bei dem darin beschriebenen Fahrzeugsitz ist der gesamte Rückenlehnenbereich nachgiebig ausgestaltet. Am Rückenlehnenträger ist ein Metallnetz angeordnet und durch Federn gehalten. Eine rückwärtige Bewegung dieses Metallnetzes wird durch Bänder verhindert. Vor dem Netz befindet sich ein Polsterkörper. Wenn eine unfallbedingte Beschleunigung auftritt, werden über eine entsprechende Steuervorrichtung entweder die Federn und/oder die Bänder freigegeben, so dass der Polsterkörper nun nicht mehr so abgestützt ist, wie zuvor. Dabei ist die Freigabe eines Bandes und/oder einer Feder dargestellt, die sich relativ weit von der Kopfstütze entfernt befindet, jedenfalls unterhalb des Schulterbereichs eines Passagiers ist.

Hiervon ausgehend hat sich die Erfindung die Aufgabe gestellt, den Fahrzeugsitz der eingangs genannten Art so weiterzuentwickeln, dass bei einem Heckaufprall eine Relativbewegung des Kopfes gegenüber dem Rücken weiter verringert wird und insbesondere auch bei einem Abstand des Kopfes vom Kopfstützkissen der Kopfstütze bei einer unfallbedingten Beschleunigung Rücken und Kopf etwa gleichzeitig abgefangen werden, ohne dass der Kopf nach hinten bewegt wird.

Diese Aufgabe wird gelöst durch den Fahrzeugsitz mit den Merkmalen des Patentanspruchs 1. Erfindungsgemäß wird bei einem Heckunfall die schädliche Wirkung eines Abstandes zwischen dem Kopf eines Passagiers und dem Kopfstützkissen dadurch vermieden, dass der obere Bereich des Polsterkörpers bei einem Unfall sehr weich wird, so dass der Rücken tiefer in die Rückenlehne eintauchen kann und erst dann abgefangen wird, wenn auch der Kopf am Kopfstützkissen anliegt. Zumindest der obere Bereich des Polsterkörpers hat also zwei unterschiedliche Nachgiebigkeiten, in die er gezielt gebracht werden kann. Im normalen Zustand des Kraftfahrzeugs hat dieser obere Bereich, der auch als Schulterbereich bezeichnet wird, eine für den Gebrauch normale Nachgiebigkeit. Diese Nachgiebigkeit entspricht der Polsterqualität normaler Fahrzeugsitze. Bei einem Heckunfall wird nun die Nachgiebigkeit abrupt geändert, der Schulterbereich wird sehr weich, die Dicke des Schulterbereichs kann bei Belastung durch einen Passagier nun viel geringer werden als bei normaler Nachgiebigkeit. Dadurch kann sich der Rücken eines Passagiers nun weiter nach hinten, zum Rückenlehnenträger hin bewegen. Wenn nun der zusätzliche Weg, den der Rücken aufgrund des nun weichen Schulterbereich zur Verfügung hat, dem Abstand zwischen Kopf und Kopfstützkissen entspricht, wie dieser Abstand vor Beginn des Unfalls bestand, findet keine Relativbewegung zwischen Kopf und Rumpf statt, der Peitschenschlag des Kopfes nach hinten tritt also nicht auf. Dieser zusätzliche Weg kann auch größer sein als der genannte Abstand, er sollte nur nicht kleiner sein.

Die Umschaltung der Nachgiebigkeit des Schulterbereichs tritt erst oberhalb eines Schwellenwertes der Beschleunigung des Kraftfahrzeuges ein. Dieser Schwellenwert wird durch geeignete Mittel erfasst. So kann er beispielsweise durch Erfassungsvorrichtungen wie sie auch für Gurtstrammer, Airbags usw. eingesetzt werden, erhalten werden. Er kann aber auch durch die Relativbewegung des Passagiers gegenüber der Rückenlehne erfasst werden. Bei einem Heckaufprall taucht auch der untere Rückenbereich des Passagiers in die Rückenlehne ein, diese Bewegung kann genutzt werden, um die Umschaltung der Nachgiebigkeit des Schulterbereichs auszulösen.

Als Erfahrungswert kann man davon ausgehen, dass der Freiraum zwischen dem Kopf und dem Kopfstützkissen einer Kopfstütze üblicherweise bei etwa 40 mm liegt. Ebenso gross sollte daher die Reduzierung der Dicke sein, die durch die gesteuerte Änderung der Nachgiebigkeit erreicht wird. Die Dicke des Schulterbereichs bei weich geschaltetem Polsterkörper sollte mindestens 30, vorzugsweise mindestens 40 mm geringer sein als die Dicke bei normalem Zustand des Polsterkörpers.

Im Schulterbereich ist ein Stützteil zugeordnet, das mit dem Rückenlehnenträger in Verbindung ist und die Nachgiebigkeit des Schulterbereichs beeinflusst, insbesondere bestimmt. Dieses Stützteil hat einen ersten, normalen Zustand, solange der Schwellenwert der unfallbedingten Beschleunigung des Kraftfahrzeugs nicht erreicht ist. Wird dieser Schwellenwert jedoch erreicht und überschritten, so nimmt das Stützteil einen zweiten Zustand ein. In diesem zweiten Zustand bestimmt es eine deutlich höhere Nachgiebigkeit des Schulterbereichs. Dieses Stützteil ist als luftgefülltes Kopfstützkissen ausgebildet.

Die Verringerung der Dicke des Schulterbereichs stellt sich nicht automatisch ein, sie wird dadurch erreicht, dass der Passagier sich relativ zur Rückenlehne bewegt.

In einer bevorzugten Ausbildung ist ein elastisches Mittel vorgesehen, das das Stützteil in den ersten, normalen Zustand vorbelastet. Dadurch wird die normale Nachgiebigkeit des Schulterbereichs mitbestimmt. Weiterhin ist esmöglich, dass das Stützteil bei einer Fehlbedienung selbsttätig wieder in die normale Position zurückkehrt.

Vorzugsweise ist eine Sperrvorrichtung mit einem bewegbaren Sperrteil vorgesehen, das im ersten Zustand des Stützteils dieses mechanisch sichert. Das Sperrteil wird wirkungslos und sichert das Stützteil nicht mehr, wenn die oberhalb des Schwellenwertes liegende Beschleunigung auftritt. Die Bewegung des Sperrteils kann durch die schon oben beschriebenen Mittel gesteuert werden, also beispielsweise durch die Auslöseeinheit eines Airbags oder durch eine sehr starke Bewegung des Pos eines Passagiers in die Rückenlehne hinein.

Ein entscheidender Vorteil der Erfindung liegt darin, dass die Kopfstütze direkt dem Rückenlehnenträger zugeordnet ist und dadurch auf die Kopfstütze einwirkende Kräfte direkt in den Rückenlehnenträger und damit in ein Sitzuntergestell eingeleitet werden.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In der Zeichnung zeigen:
- Fig. 1:: eine Seitenansicht eines Fahrzeugsitzes (teilweise) mit einem Passagier (teilweise gezeichnet) der sich auf diesem Fahrzeugsitz befindet, das Kraftfahrzeug ist im normalen Zustand, der Schulterbereich der Rückenlehne hat eine normale Nachgiebigkeit, und
- Fig. 2:: eine Darstellung der wesentlichen Elemente von Figur 1, jedoch nun für eine unfallbedingte Situation des Kraftfahrzeugs, der Schulterbereich hat nun eine wesentlich geringere Dicke als im Normalzustand, der Kopf des Passagiers liegt an einem Kopfstützkissen an.

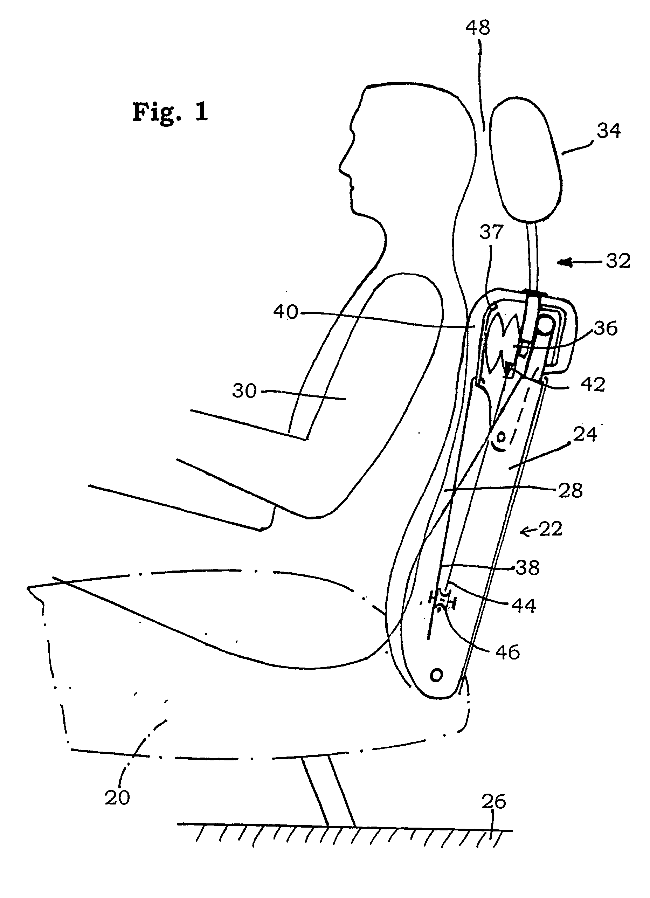

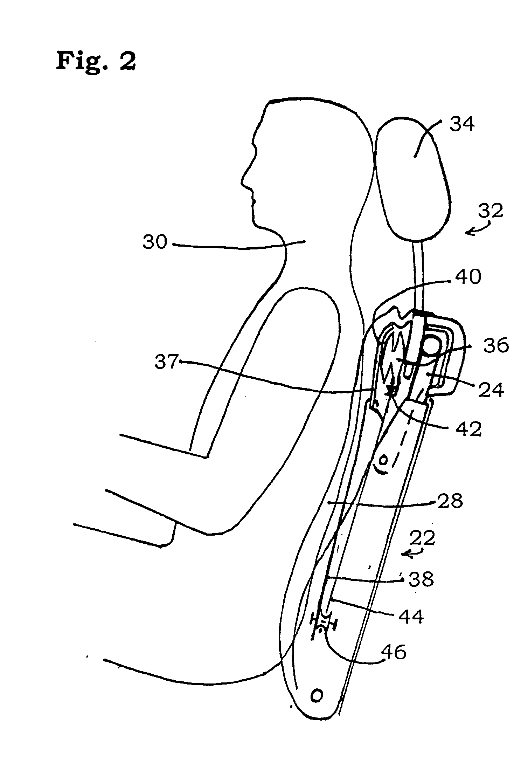

Das Ausführungsbeispiel nach den Figuren 1 und 2 zeigt einen Fahrzeugsitz mit einem Sitzteil 20 und einer Rückenlehne 22. Die Rückenlehne 22 hat einen Rückenlehnenträger 24. Er gibt die Form und Festigkeit der Rückenlehne vor. Er ist unten in bekannter Weise über eine einstellbare Schwenkverbindung mit einem Sitzträger des Sitzteils 20 verbunden.

Das Sitzteil 20 ist über hier nur schematisch angedeutete Verbindungselemente mit einer Bodengruppe 26 des Kraftfahrzeugs verbunden.

Weiterhin hat die Rückenlehne 22 einen Polsterkörper 28, der vom Rückenlehnenträger 24 getragen wird und sich auf der Vorderseite, also der einen Passagier 30 zugewandten Seite der Rückenlehne befindet. Unter Polsterkörper wird die gesamte Bepolsterung verstanden. Sie hat typischerweise einen Bezug, eine Schaumstofflage, eine Federung und einen Hohlraum. Schliesslich ist eine am Rückenlehnenträger 24 befestigte Kopfstütze 32 vorgesehen, die Holme und ein Kopfstützkissen 34 aufweist.

In den Figuren 1 und 2 ist die Rückenlehne 22 im Schnitt dargestellt. In einem oberen Bereich der Rückenlehne, der von der Oberkante der Rückenlehne ausgehend sich nach unten erstreckt und etwa 1/3 bis die Hälfte der Gesamtlänge der Rückenlänge ausmacht, ist als Stützteil ein Stützkissen 36 angeordnet. Es befindet sich zwischen dem Rückenlehnenträger 24, jedenfalls einem Teil dieses Rückenlehnenträgers, und einer vorderen Gelenkstütze 37. Es ist im wesentlichen für die Nachgiebigkeit des oberen Rückenlehnenbereichs verantwortlich. Dieser obere Rückenlehnenbereich wird im folgenden Schulterbereich 40 genannt.

In der Darstellung nach Figur 1 ist das Stützkissen luftgefüllt, der Schulterbereich 40 hat seine normale Dicke, gemessen in Fahrtrichtung des Kraftfahrzeugs. Das Stützkissen ist verschlossen, ein Ventilkörper 42 dichtet es nach aussen ab. Dieser Ventilkörper 42 ist über ein Zugelement 44 mit einer unteren Rolle 46 verbunden, dort wird das Zugelement umgelenkt und auf die andere Seite des Rückenlehnenträgers 24 geführt. An dieser ist es befestigt.

Bei einem Heckaufprall schiebt sich die Rückenlehne zum Passagier hin, der Rücken des Passagiers taucht tiefer in die Rückenlehne ein. Diese Bewegung strafft das Zugelement. Die dabei auftretende Spannung im Zugelement bewirkt, dass der Ventilkörper aus seinem Dichtsitz freikommt und das Stützkissen 36 nunmehr geöffnet ist. Die in ihm befindliche Luft kann also herausströmen. Sie strömt dadurch heraus, dass auch im oberen Bereich die Rückenlehne sich zum Passagier hin bewegt. Der Schulterbereich 40 ist nun aber nicht mehr so fest wie gemäß Figur 1, vielmehr ist er wesentlich nachgiebiger. Er verformt sich unter der Belastung durch den Passagier, wie in Figur 2 dargestellt ist, hat also eine geringere Dicke. Das Stützkissen 36 ist weitgehend zusammengefaltet. Eine Faltenbildung ist an der Oberkante der Rückenlehne zu erkennen.

Der Zustand gemäß Figur 2 wird erreicht, wenn ein unfallbedingter Beschleunigungswert vorliegt. Dann wird der Schulterbereich 40 so nachgiebig, dass er praktisch kraftlos auf die geringere Dicke eingedrückt werden kann. Auf diese Weise kann die Stellung des Kopfes zum Rumpf ungeändert beibehalten werden, wie auch ein Vergleich der Figuren 1 und 2 zeigt, wenn die Rückenlehne sich unfallbedingt gegen den träg verharrenden Passagier bewegt.

Während im normalen Zustand, wie in Figur 1 dargestellt, ein Freiraum 48 zwischen dem Kopf eines Passagiers und dem Kopfstützkissen 34 besteht, ist dies im unfallbedingten Zustand gemäß Figur 2 nicht mehr der Fall. Aufgrund der praktisch kraftlosen Nachgiebigkeit des Schulterbereichs 40 wird der Rücken und Kopf des Passagiers in der Relativlage zueinander abgestützt, die auch im normalen Zustand gemäß Figur 1 vorlag. Der Kopf bewegt sich also nicht gegenüber dem Rumpf nach hinten.

## Patentansprüche

1. Fahrzeugsitz für ein Kraftfahrzeug, wobei der Fahrzeugsitz ein Sitzteil (20) und eine Rückenlehne (22) hat, welche Rückenlehne (22) a) einen Rückenlehnenträger (24), b) einen an diesem Rückenlehnenträger (24) angeordneten Polsterkörper (28) und c) eine am Rückenlehnenträger (24) befestigte Kopfstütze (32) aufweist, wobei der Polsterkörper (28) einen oberen, der Kopfstütze (32) benachbarten Schulterbereich (40) aufweist, der einerseits bei einem normalen Zustand des Kraftfahrzeugs bei einer Belastung durch den Rücken eines Passagiers (30) eine normale Nachgiebigkeit aufweist und andererseits bei einer unfallbedingten, oberhalb eines Schwellenwertes liegenden Beschleunigung des Kraftfahrzeugs eine gegenüber der normalen Nachgiebigkeit deutlich höhere Nachgiebigkeit aufweist und dem Schulterbereich (40) ein Stützteil (36, 50) zugeordnet ist, das mit dem Rückenlehnenträger (24) in Verbindung ist und das die Nachgiebigkeit des Schulterbereichs (40) beeinflusst, wobei es gesteuert bei Überschreiten des Schwellenwertes aus dem ersten, normalen Zustand, in dem es die normale Nachgiebigkeit des Schulterbereichs (40) bestimmt, in einen zweiten Zustand übergeht, in dem es die deutlich höhere Nachgiebigkeit des Schulterbereichs (40) bestimmt,
**dadurch gekennzeichnet, dass** das Stützteil ein Stützkissen (36) ist, das am Rückenlehnenträger (24) anliegt und in seinem ersten Zustand luftgefüllt und abgeschlossen ist und in seinem zweiten Zustand geöffnet ist, so dass bei Druck auf das Stützkissen (36) Luft aus diesem entweicht und bei einer Belastung durch den Rücken eines Passagiers (30) der Schulterbereich (40) eine deutlich geringere Dicke aufweist als im Zustand normaler Nachgiebigkeit.

2. Fahrzeugsitz nach Anspruch 1, **dadurch gekennzeichnet, dass** die geringere Dicke mindestens um etwa 30, vorzugsweise um etwa 40 mm geringer ist als die Dicke bei der normalen Nachgiebigkeit.

3. Fahrzeugsitz nach Anspruch 1, **dadurch gekennzeichnet, dass** ein elastisches Mittel vorgesehen ist, das das Stützteil in den ersten, normalen Zustand vorbelastet.

4. Fahrzeugsitz nach Anspruch 1, **dadurch gekennzeichnet, dass** eine Sperrvorrichtung (56) mit einem bewegbaren Sperrteil vorgesehen ist, das im ersten Zustand das Stützteil mechanisch sichert, aber wirkungslos wird, wenn die oberhalb des Schwellenwertes liegende Beschleunigung auftritt.

5. Fahrzeugsitz nach Anspruch 4, **dadurch gekennzeichnet, dass** die Sperrvorrichtung (56) ein Auslöseteil aufweist, das mit dem Sperrteil verbunden ist und dieses bei einer oberhalb des Schwellenwertes liegenden Beschleunigung in eine Freigabestellung bewegt.

6. Fahrzeugsitz nach Anspruch 4, **dadurch gekennzeichnet, dass** die Sperrvorrichtung (56) mit einer elektronischen Vorrichtung zum Erfassen einer Beschleunigung verbunden ist, z. B. einer Vorrichtung zum Steuern eines Airbags.

## Claims

1. Vehicle seat for an automotive vehicle, wherein the vehicle seat has a seat pan (20) and a seat back (22), said seat back (22) being provided with a) a seat back carrier (24), b) a padding body (28) arranged on said seat back carrier (24) and c) a headrest (32) fastened on said seat back carrier (24), wherein the padding body (28) comprises an upper shoulder area (40) neighboring the headrest (32) and being on one side, provided with a normal disposition to yield to the load of a passenger's (30) back in the case of a regular status of the automotive vehicle, and on the other side with a disposition to yield increased considerably in case of an acceleration of the automotive vehicle brought about by an accident and exceeding a threshold value, and wherein the shoulder area (40) is provided with a supporting part (36, 50) connected to the seat back carrier (24) and influencing the disposition to yield of the shoulder area (40), wherein said supporting part, in a controlled way upon exceeding the threshold value changes from the first, normal condition, in which it determines the normal disposition to yield of the shoulder area (40), adopts, to a second condition, in which it determines the considerably higher disposition to yield of the shoulder area (40), **characterized in that** the supporting part is a supporting cushion (36) that rests on the seat back carrier (24) and that is inflated and closed in its first condition, whereas in its second condition it is open so that the air may flow out upon pressure exerted onto the supporting cushion (36) and the shoulder area (40) shows under load of the back of a passenger (30) a considerable smaller thickness than in the state of normal yield.

2. Vehicle seat according to claim 1, **characterized in that** the reduced thickness is reduced by approximately 30, preferably 40 mm, compared to the thickness given when in the normal disposition to yield.

3. Vehicle seat according to claim 1, **characterized in that** an elastic means is provided that pretensions the supporting part in the first, normal condition.

4. Vehicle seat according to claim 1, **characterized in that** a locking device (56) with a movable locking part is provided, said locking part mechanically securing the supporting part in the first condition, but becoming inefficient when the acceleration exceeds the threshold value.

5. Vehicle seat according to claim 4, **characterized in that** the locking device (56) is provided with a trigger unit, which is connected to the locking part and brings said locking part into a releasing position when the acceleration exceeds the threshold value.

6. Vehicle seat according to claim 4, **characterized in that** the locking device (56) is connected to an electronic device for detecting acceleration, to a device designed to control an air bag for example.

## Revendications

1. Siège de véhicule pour un véhicule automobile, le siège de véhicule ayant une partie assise (20) et un dossier (22), ledit dossier (22) présentant a) un support de dossier (24) , b) un corps rembourré (28) qui est disposé sur ce support de dossier (24) et c) un appui-tête (32) fixé sur le support de dossier (24), le corps rembourré (28) présentant une zone supérieure d'épaule (40) qui est voisine de l'appui-tête (32) et qui, d'un côté, dans un état normal du véhicule automobile, présente une souplesse normale dans le cas d'une charge due au dos d'un passager (30) et qui, de l'autre côté, dans le cas d'une accélération du véhicule automobile qui est due à un accident et supérieure à une valeur seuil, présente une souplesse sensiblement plus importante par rapport à la souplesse normale, et à ladite zone d'épaule (40) étant associée une pièce d'appui (36, 50) qui est en communication avec le support de dossier (24) et qui influe sur la souplesse de la zone d'épaule (40), ladite pièce d'appui d'une manière commandée lorsque la valeur seuil est dépassée sort le premier état normal dans lequel elle détermine la souplesse normale de la zone d'épaule (40) et prend un deuxième état, dans lequel elle détermine la souplesse sensiblement plus importante de la zone d'épaule (40), **caractérisé par le fait que** ladite pièce d'appui est un coussin d'appui (36) qui s'applique contre le support de dossier (24) et qui, dans son premier état, est rempli d'air et fermé et, dans son deuxième état, est ouvert, de sorte que de l'air s'échappe du coussin d'appui (36) lorsqu'une pression est exercée sur celui-ci et que, dans le cas d'une charge due au dos d'un passager (30), la zone d'épaule (40) présente une épaisseur sensiblement plus faible qu'en état de souplesse normale.

2. Siège de véhicule selon la revendication 1, **caractérisé par le fait que** l'épaisseur plus faible est d'au moins environ 30, de préférence de 40 mm à peu près plus faible que l'épaisseur dans le cas de la souplesse normale.

3. Siège de véhicule selon la revendication 1, **caractérisé par le fait que** l'on prévoit un moyen élastique qui précontraint la pièce d'appui dans le premier état normal.

4. Siège de véhicule selon la revendication 1, **caractérisé par le fait que** l'on prévoit un dispositif d'arrêt (56) comprenant une pièce d'arrêt mobile qui immobilise mécaniquement la pièce d'appui dans le premier état, mais qui devient inefficace lorsque l'accélération dépasse la valeur seuil.

5. Siège de véhicule selon la revendication 4, **caractérisé par le fait que** le dispositif d'arrêt (56) présente une pièce de déclenchement qui est reliée à la pièce d'arrêt et déplace celle-ci dans une position de libération lorsque l'accélération est supérieure à la valeur seuil.

6. Siège de véhicule selon la revendication 4, **caractérisé par le fait que** le dispositif d'arrêt (56) est relié à un dispositif électronique destiné à détecter une accélération, par exemple à un dispositif à commander un airbag.
